# EUROPEAN PATENT SPECIFICATION

(11) **EP 3 597 023 B1**
(45) Date of publication and mention of the grant of the patent: **24.02.2021**
(21) Application number: 19185686.3
(22) Date of filing: 11.07.2019
(51) Int. Cl.: A01D 34/00, A01D 34/73

(54) **LAWNMOWER CUTTING BLADE WITH IMPROVED SHREDDING**
RASENMÄHERSCHNEIDMESSER MIT VERBESSERTER ZERKLEINERUNG
LAME DE COUPE DE TONDEUSE À GAZON À DÉCHIQUETAGE AMÉLIORÉ

(30) Priority: 20.07.2018 IT 201800007375
(43) Date of publication of application: 22.01.2020
(73) Proprietor: Stiga S.p.A. in breve anche St. S.p.A., 31033 Castelfranco Veneto (TV) (IT)
(72) Inventor: ZONTA, Paolo, 31033 CASTELFRANCO VENETO (TV) (IT)
(74) Representative: Mittler, Andrea

(56) References cited:
- EP-A1- 3 141 099
- US-A- 5 199 251
- US-A- 5 284 006
- US-A- 5 669 213
- US-B1- 6 490 850

## Description

The present invention relates to a lawnmower cutting blade with improved shredding.

The use of lawnmower blades, in which the grass is also shredded after having been cut, is well known. In this manner, it is not necessary to proceed to a subsequent step of collecting of the cut grass because the shredding reduces the cut grass to a size suitable for resorption in the ground over time.

Also in terms of appearance, the shredded grass does not compromise the pleasant appearance of a mowed lawn.

Lawnmower blades usually have a flat central portion with holes for attaching to the hub, and at least one side portion for cutting, and possibly shredding, the grass.

Shredding is basically a secondary cut which, for example, can be achieved by providing two or more cutting edges at the ends of the cutting blade, possibly inclined with respect to one another and inclined with respect to the horizontal attachment plane of the cutting blade to the hub.

The prior art suggests a plurality of cutting blades with a pair of end portions with two or more cutting edges.

For example, US-5619846 and CA-2513244 show a cutting blade with three cutting end edges. The first edge which encounters the grass performs a primary cut, while the other two edges perform a secondary and tertiary cut for shredding the grass.

In US-5619846 the cutting edges are parallel to the horizontal plane of attachment to the hub, although not coplanar thereto.

In CA-2513244 the cutting edges are inclined with respect to one another and inclined with respect to the horizontal plane of attachment to the hub.

Another example of a cutting blade with cutting end edges is shown in US-7841159, in which a pair of cutting edges at each end perform a primary cut and a secondary cut or shredding.

Other similar solutions are shown in US-5669213, US-5321940 and US-5199251.

The making of a plurality of cutting edges at the ends of the cutting blade certainly allows at least one primary cut and one secondary cut or shredding, but the latter is not very efficient because of the turbulence generated by the rotation of the blade following the primary cut.

Disadvantageously, only part of the grass is shredded.

Also in the aforesaid solutions, in which the ends have three cutting edges, while increasing the percentage of shredded grass, there is no effective control of the shredding.

EP-3141099 describes a lawnmower cutting blade, comprising a central attachment portion to a lawnmower hub and two side cutting portions. Each side cutting portion comprises a first cutting end member and a second cutting end member able to define at least one cutting end bifurcation contained in each side cutting portion. The cutting blade further comprises an intermediate cutting member between the central portion and the two side cutting portions. Said intermediate cutting member has an inclined surface with respect to the central portion.

It is the object of the present invention to manufacture a lawnmower blade which increases the percentage of shredded grass compared to the cut grass.

It is another object of the present invention that said cutting blade has a simple construction so that the attachment to the hub is easy.

It is a further object of the present invention that said cutting blade performs a constant cutting and shredding over time, and that it is constructively simple.

According to the invention, said and further objects are achieved by a lawnmower cutting blade as defined in claim 1.

Operatively, a primary cut, a secondary cut (first shredding) and a tertiary cut (second shredding) are obtained.

The configuration of the first cutting end member and of the second cutting end member determines a primary vortex, while the orientation of the inclined surface obtains a secondary vortex, counter-rotating with respect to the primary vortex: advantageously the shredding is improved because a double shredding cutting profile, much longer as a whole, is obtained.

Said counter-rotating vortex is determined by the opposite orientation of the inclined surface with respect to the first cutting end member that is responsible for the primary cut.

These and other features of the present invention will be more apparent from the following detailed description of a practical embodiment thereof, shown by way of non-limiting example in the accompanying drawings, in which:
figure 1 shows a top plan view of a cutting blade according to the present invention;

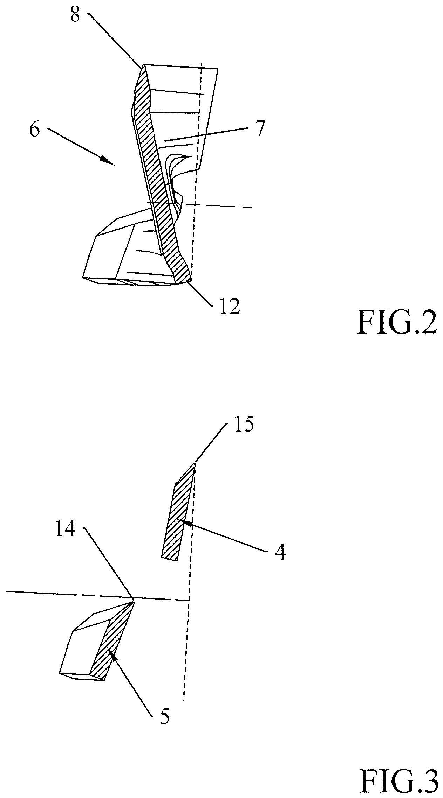

figure 2 shows a section view according to line II-II of figure 1;
figure 3 shows a section view according to line III-III of figure 1;
figure 4 shows a side view of the cutting blade;
figure 5 shows a front view of the cutting blade.

A cutting blade 1 comprises a central portion 2 for attachment to a hub of a lawnmower (not shown), and two side cutting portions 3.

Each side cutting portion 3 comprises a first cutting end member 4, a second cutting end member 5 and an intermediate cutting member 6.

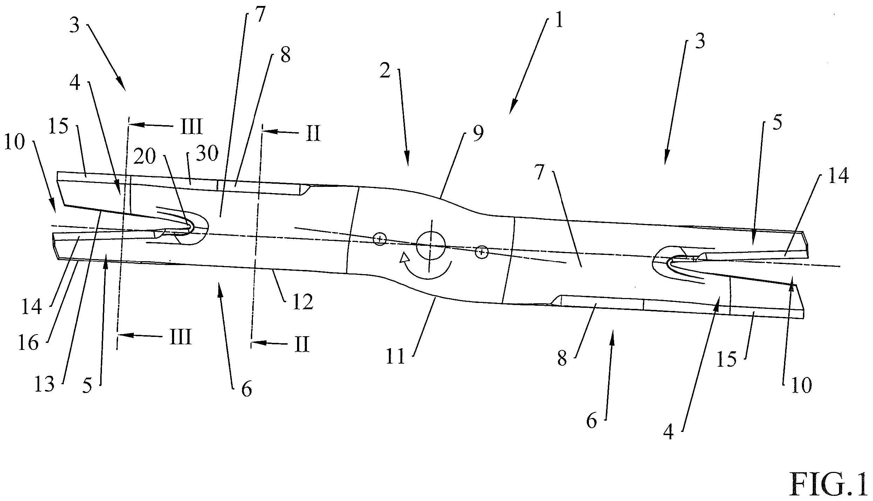

The central portion 2 is flat and lies on a horizontal plane around which the rotation takes place (clockwise, observing figure 1), while the intermediate cutting member 6, which develops continuously in the central portion 2, has an inclined surface 7 with respect to the central portion 2. The inclination is in the transverse direction of the cutting blade 1.

The inclined surface 7 ends with a first cutting edge 8, which develops continuously starting from a first edge 9 of the central portion 2, which also comprises a second edge 11 which ends, again continuously, in a second edge 12 of the intermediate cutting member 6 opposite to said first edge 8.

The inclined surface 7 connects said edges 8, 12 of the intermediate cutting member 6.

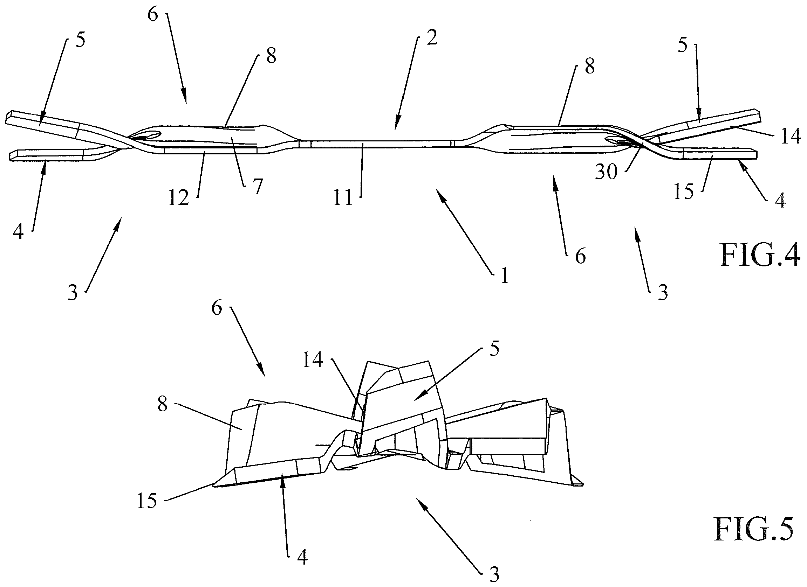

As can be clearly seen in figures 1 and 4, the first cutting end member 4 and the second cutting end member 5 are mutually inclined. They may also be inclined with respect to the horizontal plane of the central portion 2. Said inclination of the cutting end members 5 is in the longitudinal direction of the cutting blade 1.

The first cutting end member 4 and the second cutting end member 5 define a bifurcation of the cutting end 10 contained in each side cutting portion 3.

An inner edge 13 of the first cutting end member 4 and an inner cutting edge 14 of the second cutting end member 5 converge in a vertex 20.

An outer cutting edge 15 of the first cutting end member 4 develops continuously by means of a possibly cutting connecting edge 30 from the first edge 8 of the intermediate cutting member 6, while an outer edge 16 of the second cutting end member 5 develops continuously starting from the second edge 12 of the intermediate cutting member 6.

The edges 8, 9, 15 and 30 form a single continuous edge, as well as the edges 11, 12 and 16.

Looking at figure 4, it can be seen that the first cutting end member 4 lowers in the longitudinal direction towards the end with respect to the central portion 2, while the second cutting end member 5 raises in the longitudinal direction towards the end in relation to the central portion 2. Consequently, the first cutting end member 4 and the second cutting end member 5 are mutually divergent in a longitudinal direction towards the end of the cutting blade 1.

It is worth noting that the first edge 8 of the intermediate cutting member 6 from which the outer edge 15 of the first cutting end member 4 develops, unlike the latter, is raised with respect to the central portion 2. The outer edge 15 is instead lowered with respect to the central portion 2. A cutting wave profile is substantially formed in the longitudinal direction, which by moving away from the central portion 2, first raises (first edge 8) and then lowers (outer edge 15).

Similarly, the second edge 12 of the intermediate cutting member 6 from which the edge 16 of the second cutting end member 5 develops, unlike the latter, is in a lowered position with respect to the central portion 2. The inner edge 14 of the second cutting end member 5 is raised above the central portion 2. An inverted wave profile, non-cutting, is formed on the opposite side of the cutting blade 1, which again in longitudinal direction, moving away from the central portion 2, first lowers (second edge 12) and then raises (edge 16).

The edge 15 is preferably parallel to the horizontal plane. The edge 8 is also preferably parallel to the horizontal plane.

The described arrangement of the edges 8 and 12, i.e. the orientation of the inclined surface 7, with respect to the cutting end members 4, 5, in addition to the reciprocal arrangement of the latter, determines an air flow which improves the shredding of the grass, as will be clearer later on.

Operatively, considering figure 1, the cutting blade 1 turns clockwise so that the edge 15 cuts the grass (primary cut), the edge 14 performs a first shredding (secondary cut) and the edge 8 performs a second shredding (tertiary cut).

The configuration of the first cutting end member 4 and of the second cutting end member 5 determines a primary vortex, while the orientation of the inclined surface 7 obtains a secondary vortex, counter-rotating with respect to the primary vortex: a double shredding cutting profile, much longer as a whole, is obtained, given substantially by the sum of the edges 14 and 8 in succession of intervention.

Said counter-rotating vortex is determined by the opposite orientation of the inclined surface 7 (with the first edge 8 raised) with respect to the first cutting end member 4 (with the outer edge 15 lowered), which is responsible for the primary cut, more specifically it is determined by the inverse shape of said wave profiles.

Edges 8 and 15, both cutting, are placed along the same continuous line, by means of the connecting edge 30, but perform a different function, i.e. the primary cut and the tertiary cut.

What described for one side portion 3 must be obviously repeated for the other side portion 3: a double action of primary, secondary and tertiary cuts is therefore obtained for each complete revolution of the cutting blade 1.

Alternatively, each side portion 3 may have more than two cutting end members, provided that the same relative orientation is maintained between the first cutting end member and the inclined surface of the intermediate cutting end member. Substantially, after the primary cut, the shredding cuts increase before the last shredding cut of the cutting edge of the inclined surface. The primary vortex and the secondary counter-rotating vortex remain.

Alternatively, the cutting blade 3 may comprise more than two side portions 3 about the central portion 2.

## Claims

1. A cutting blade (1) for lawnmower, comprising a central portion (2) for attachment to a hub of the lawnmower, and at least two side cutting portions (3), each side cutting portion (3) comprises at least a first cutting end member (4) and a second cutting end member (5) able to define at least one cutting end bifurcation (10) contained in each side cutting portion (3),
the cutting blade (1) further comprises an intermediate cutting member (6) between the central portion (2) and the at least two side cutting portions (3),
said intermediate cutting member (6) has an inclined surface (7) with respect to the central portion (2), comprises a first edge (8) able to cut, raised with respect to a horizontal plane on which the central portion (2) lies, and a second edge (12) opposite to said first edge (8), the inclined surface (7) connecting said first edge (8) and second edge (12),
the first cutting end member (4) comprises an outer edge (15) able to cut, which develops continuously, by means of a possibly cutting connecting edge (30) starting from the first edge (8) of the intermediate cutting member (6),
the second cutting end member (5) comprises an inner edge (14) able to cut,
**characterized in that**
the outer edge (15) is lowered with respect to the first edge (8) of the intermediate cutting member (6) and with respect to the horizontal plane on which the central portion (2) lies,
the inner edge (14) is raised with respect to the horizontal plane on which the central portion (2) lies,
the second edge (12) is lowered with respect to the horizontal plane on which the central portion (2) lies.

2. A cutting blade (1) according to claim 1, **characterized in that** said first edge (8) of the intermediate member (6) is horizontal.

3. A cutting blade (1) according to claim 1 or 2, **characterized in that** the first cutting end member (4) and the second cutting end member (5) are mutually inclined in the longitudinal direction of the cutting blade (1).

4. A cutting blade (1) according to any one of the preceding claims, **characterized in that** the first cutting end member (4) and the second cutting end member (5) are inclined with respect to the longitudinal direction of the cutting blade (2).

5. A cutting blade (1) according to claim 4, **characterized in that** the first cutting end member (4) lowers proceeding towards the outer end with respect to the central portion (2).

6. A cutting blade (1) according to claim 4 or 5, **characterized in that** the second cutting end member (5) raises proceeding towards the outer end with respect to the central portion (2).

7. A cutting blade (1) according to claim 2, **characterized in that** the outer edge (15) of the first cutting end member (4) is horizontal.

8. A lawnmower **characterized in that** it comprises a cutting blade (1) according to any one of the preceding claims.

## Patentansprüche

1. Schneidmesser (1) für einen Rasenmäher, das einen zentralen Bereich (2) zur Befestigung an einer Nabe des Rasenmähers und mindestens zwei seitliche Schneidbereiche (3) aufweist, wobei jeder seitliche Schneidbereich (3) mindestens ein erstes schneidendes Endelement (4) und ein zweites schneidendes Endelement (5) aufweist, die in der Lage sind, mindestens eine schneidende Endgabelung (10) zu bilden, die in jedem seitlichen Schneidbereich (3) enthalten ist,
wobei das Schneidmesser (1) ferner ein zwischengeordnetes schneidendes Element (6) zwischen dem zentralen Bereich (2) und den mindestens zwei seitlichen Schneidbereichen (3) aufweist,
wobei das zwischengeordnete schneidende Element (6) eine gegenüber dem zentralen Bereich (2) geneigte Fläche (7) besitzt, eine zum Schneiden ausgebildete erste Kante (8) aufweist, die in Bezug auf eine horizontale Ebene, in der der zentrale Bereich (2) liegt, angehoben ist, sowie eine zweite Kante (12) gegenüber der ersten Kante (8) aufweist, wobei die geneigte Fläche (7) die erste Kante (8) und die zweite Kante (12) miteinander verbindet,
wobei das erste schneidende Endelement (4) eine zum Schneiden ausgebildete Außenkante (15) aufweist, die sich mittels einer gegebenenfalls schneidenden Verbindungskante (30) ausgehend von der ersten Kante (8) des zwischengeordneten schneidenden Elements (6) kontinuierlich erstreckt,
wobei das zweite schneidende Endelement (5) eine zum Schneiden ausgebildete Innenkante (14) aufweist,
**dadurch gekennzeichnet, dass**
die Außenkante (15) in Bezug auf die erste Kante (8) des zwischengeordneten Schneidelements (6) und in Bezug auf die horizontale Ebene, in der der zentrale Bereich (2) liegt, abgesenkt ist,
die Innenkante (14) in Bezug auf die horizontale Ebene, in der der zentrale Bereich (2) liegt, angehoben ist,
die zweite Kante (12) in Bezug auf die horizontale Ebene, in der der zentrale Bereich (2) liegt, abgesenkt ist.

2. Schneidmesser (1) nach Anspruch 1,
**dadurch gekennzeichnet, dass** die erste Kante (8) des zwischengeordneten Elements (6) horizontal ist.

3. Schneidmesser (1) nach Anspruch 1 oder 2,
**dadurch gekennzeichnet, dass** das erste schneidende Endelement (4) und das zweite schneidende Endelement (5) in Längsrichtung des Schneidmessers (1) gegenseitig geneigt sind.

4. Schneidmesser (1) nach einem der vorhergehenden Ansprüche,
**dadurch gekennzeichnet, dass** das erste schneidende Endelement (4) und das zweite schneidende Endelement (5) in Bezug auf die Längsrichtung des Schneidmessers (2) geneigt sind.

5. Schneidmesser (1) nach Anspruch 4,
**dadurch gekennzeichnet, dass** sich das erste schneidende Endelement (4) in Richtung zu dem äußeren Ende hin in Bezug auf den zentralen Bereich (2) nach unten erstreckt.

6. Schneidmesser (1) nach Anspruch 4 oder 5,
**dadurch gekennzeichnet, dass** sich das zweite schneidende Endelement (5) in Richtung zu dem äußeren Ende hin in Bezug auf den zentralen Bereich (2) nach oben erstreckt.

7. Schneidmesser (1) nach Anspruch 2,
**dadurch gekennzeichnet, dass** die Außenkante (15) des ersten schneidenden Endelements (4) horizontal ist.

8. Rasenmäher,
**dadurch gekennzeichnet ist, dass** er ein Schneidmesser (1) nach einem der vorhergehenden Ansprüche aufweist.

## Revendications

1. Lame de coupe (1) pour tondeuse à gazon, comprenant une partie centrale (2) pour se fixer à un moyeu de la tondeuse à gazon, et au moins deux parties de coupe latérales (3), chaque partie de coupe latérale (3) comprend au moins un premier élément d'extrémité de coupe (4) et un second élément d'extrémité de coupe (5) pouvant définir au moins une bifurcation d'extrémité de coupe (10) contenue dans chaque partie de coupe latérale (3),
la lame de coupe (1) comprend en outre un élément de coupe intermédiaire (6) entre la partie centrale (2) et les au moins deux parties de coupe latérales (3),
ledit élément de coupe intermédiaire (6) a une surface inclinée (7) par rapport à la partie centrale (2), comprend un premier bord (8) en mesure de couper, levé par rapport à un plan horizontal sur lequel se trouve la partie centrale (2) et un second bord (12) opposé audit premier bord (8), la surface inclinée (7) raccordant ledit premier bord (8) et le second bord (12),
le premier élément d'extrémité de coupe (4) comprend un bord externe (15) en mesure de couper, qui se développe de manière continue, au moyen d'un bord de raccordement éventuellement coupant (30) à partir du premier bord (8) de l'élément de coupe intermédiaire (6),
le second élément d'extrémité de coupe (5) comprend un bord interne (14) en mesure de couper,
**caractérisée en ce que** :
le bord externe (15) est abaissé par rapport au premier bord (8) de l'élément de coupe intermédiaire (6) et par rapport au plan horizontal sur lequel se trouve la partie centrale (2),
le bord interne (14) est levé par rapport au plan horizontal sur lequel se trouve la partie centrale (2),
le second bord (12) est abaissé par rapport au plan horizontal sur lequel se trouve la partie centrale (2).

2. Lame de coupe (1) selon la revendication 1, **caractérisée en ce que** ledit premier bord (8) de l'élément intermédiaire (6) est horizontal.

3. Lame de coupe (1) selon la revendication 1 ou 2, **caractérisée en ce que** le premier élément d'extrémité de coupe (4) et le second élément d'extrémité de coupe (5) sont mutuellement inclinés dans la direction longitudinale de la lame de coupe (1).

4. Lame de coupe (1) selon l'une quelconque des revendications précédentes, **caractérisée en ce que** le premier élément d'extrémité de coupe (4) et le second élément d'extrémité de coupe (5) sont inclinés par rapport à la direction longitudinale de la lame de coupe (2).

5. Lame de coupe (1) selon la revendication 4, **caractérisée en ce que** le premier élément d'extrémité de coupe (4) s'abaisse au fur et à mesure qu'il se dirige vers l'extrémité externe par rapport à la partie centrale (2).

6. Lame de coupe (1) selon la revendication 4 ou 5, **caractérisée en ce que** le second élément d'extrémité de coupe (5) se lève au fur et à mesure qu'il se dirige vers l'extrémité externe par rapport à la partie centrale (2).

7. Lame de coupe (1) selon la revendication 2, **caractérisée en ce que** le bord externe (15) du premier élément d'extrémité de coupe (4) est horizontal.

8. Tondeuse à gazon **caractérisée en ce qu'**elle comprend une lame de coupe (1) selon l'une quelconque des revendications précédentes.
